# EUROPEAN PATENT APPLICATION

(11) **EP 4 266 399 A1**
(43) Date of publication of application: **25.10.2023**
(21) Application number: 22874444.7
(22) Date of filing: 10.08.2022
(51) Int. Cl.: H01M 4/13, H01M 10/42, H01M 10/0525, H01M 10/058

(54) **BATTERY CELL, AND BATTERY, ELECTRIC APPARATUS, AND PREPARATION APPARATUS RELATED THERETO**

(30) Priority: 30.09.2021 CN 202122403160 U
(71) Applicant: Contemporary Amperex Technology Co., Limited, Ningde, Fujian 352100 (CN)
(72) Inventor: YANG, Limei, Ningde, Fujian 352100 (CN); LIU, Xiaomei, Ningde, Fujian 352100 (CN)
(74) Representative: Frick, Robert
(86) International application number: PCT/CN2022/111494
(87) International publication number: WO 2023/051048

(57) **Abstract**

Disclosed are a battery unit, and a battery, a power consuming device and a preparation apparatus associated therewith. The battery unit comprises: an electrode assembly comprising two electrode plates that have opposite polarities, a coated region and an uncoated region connected to each other being formed on the electrode plate, the coated region being coated with an active material layer, and the uncoated region being used for connecting to an electrode terminal of the battery unit; wherein a surface of the uncoated region is provided with a hardness increasing layer, and the hardness increasing layer has an elasticity modulus greater than 6 Gpa. By providing the hardness increasing layer on the surface of the uncoated region, the battery unit of the embodiments of the present application can alleviate the problem of battery safety caused by vibration during the use of the battery and prolong the service life of the battery.

## Description

### Cross-Reference to Related Application

The present application claims the priority of Chinese patent application no. 202122403160.9, entitled "BATTERY UNIT, AND BATTERY, POWER CONSUMING DEVICE AND PREPARATION APPARATUS ASSOCIATED THEREWITH" and filed on September 30, 2021, the entire content of which is incorporated herein by reference.

### Technical Field

The present application relates to the field of batteries, and in particular to a battery unit, and a battery, a power consuming device and a preparation apparatus associated therewith.

### Background Art

Batteries, such as lithium ion batteries, are widely applied to some electronic devices, electric transportation means, electric toys and electric apparatuses by virtue of their advantages, such as a small size, a high energy density, a high power density, many cycling times, long storage time, etc. For example, lithium ion batteries have been widely used in many products, such as cell phones, notebook computers, electromobiles, electric vehicles, electric aircrafts, electric ships, electric toy vehicles, electric toy ships, electric toy aircrafts, and electric tools.

In the development of the battery technology, the service life and safety are also non-negligible issues, in addition to improving the performance of the batteries. If the service life of the batteries does not reach the expected time, the maintenance and use costs of the batteries will be considerable. If the safety of the batteries cannot be guaranteed, the batteries cannot be used. Therefore, how to prolong the service life of the batteries and enhance the safety of the batteries are urgent technical problems to be solved in the battery technology.

### Summary of the Invention

In view of the above problems, the present application provides a battery unit, and a battery, a power consuming device and a preparation apparatus associated therewith, wherein the battery unit can alleviate the problem of battery safety caused by vibration during the use of the battery and prolong the service life of the battery.

In a first aspect, the present application provides a battery unit, including: an electrode assembly including two electrode plates that have opposite polarities, a coated region and an uncoated region connected to each other being formed on the electrode plate, the coated region being coated with an active material layer, and the uncoated region being used for connecting to an electrode terminal of the battery unit; wherein a surface of the uncoated region is provided with a hardness increasing layer, and the hardness increasing layer has an elasticity modulus greater than 6 Gpa.

In the embodiment, by providing the hardness increasing layer on the surface of the uncoated region, the rigidity of the uncoated region to which the hardness increasing layer is directly attached is increased; and it is difficult for the uncoated region to deform by means of a stress generated by the battery unit during vibration, and the occurrence of the problem can thus be effectively reduced that the uncoated region is compressed after being connected to the electrode terminal and the uncoated region or an adapter piece is broken due to continuous vibration, thereby effectively prolonging the service life of the battery and improving the safety thereof.

In some embodiments, the height of the hardness increasing layer is 0.2 to 0.7 times of the height of the uncoated region in a first direction, the first direction being an extending direction of the uncoated region.

In the embodiment, the height of the hardness increasing layer is 0.2 to 0.7 times of the height of the uncoated region; on the one hand, it is possible to ensure a coverage area of the hardness increasing layer so as to effectively play the effect of increasing the elasticity modulus of the uncoated region; on the other hand, it is possible to ensure an effective welding area of the uncoated region so as to ensure the strength of the uncoated region after connection.

In some embodiments, the thickness of the hardness increasing layer is smaller than the thickness of the active material layer.

In the embodiment, the thickness of the hardness increasing layer is smaller than the thickness of the active material layer, such that the coated region of the electrode plate can be well closely wound, the overall size of the electrode assembly can thus be ensured, and the occurrence of the problem that a local excessive diameter of the uncoated region affects in-housing assembly is reduced.

In some embodiments, the hardness increasing layer has a thickness greater than or equal to 11 um.

In the embodiment, the greater the thickness of the hardness increasing layer is, the more the elasticity modulus of the hardness increasing layer can be increased, so that the elasticity modulus of the uncoated region can be further increased.

In some embodiments, the hardness increasing layers are provided on two sides of the uncoated region.

In the embodiment, by providing the hardness increasing layers on the two sides, the elasticity modulus of the uncoated region is further increased, and the resistance of the uncoated region to deformation is effectively improved.

In some embodiments, the hardness increasing layer is in abutting connection to the active material layer.

In the embodiment, the hardness increasing layer is connected to the active material layer in order to prevent the phenomenon that the uncoated region has a weak hardness region close to the coated region and accordingly breakage occurs in the weak hardness region.

In some embodiments, the hardness increasing layer is adhesively fixed to the surface of the uncoated region.

In the embodiment, the hardness increasing layer is directly adhesively fixed to the surface of the uncoated region, and is more convenient to use.

In some embodiments, the hardness increasing layer is configured as an adhesive or an adhesive tape.

In the embodiment, the adhesive or the adhesive tape having the above elasticity modulus is used, so that on the one hand, the cost thereof is low; on the other hand, the adhesive or the adhesive tape used has a low influence on the electrode assembly, and can effectively ensure the overall performance of the electrode assembly.

In some embodiments, the uncoated region includes a connecting portion for connecting to the adapter piece or the electrode terminal of the battery unit, and the hardness increasing layer is arranged between the connecting portion and the coated region.

In the embodiment, by providing the hardness increasing layer on the weak hardness region, the hardness of the weak hardness region of the uncoated region can be directly increased, and accordingly, the uncoated region can have greater resistance to deformation.

In some embodiments, the uncoated region of the electrode plate is configured to: form a tab by means of convergence; and the battery unit further includes an adapter piece, with one end of the adapter piece being connected to the electrode terminal, and the other end of the adapter piece being press-fitted with the tab.

In the embodiment, the press-fitting between part of the region of the adapter piece and the tab can limit an axial movement of the electrode assembly in an interference manner to some extent, so that the stability of the electrode assembly can be effectively improved.

In some embodiments, a recessed region is formed in the surface of the tab facing an end cap, and the adapter piece is partially accommodated in the recessed region.

In the embodiment, the press-fitting between a raised portion and the recessed region of the tab can also decrease a moving space of the electrode assembly in other directions excluding the axial direction to some extent, so that the vibration of the electrode assembly can be further avoided.

In some embodiments, the recessed region has a depth greater than or equal to 1 mm.

In the embodiment, the recessed region greater than or equal to 1 mm is formed in the tab, and can play a superior stabilizing effect after the recessed region matches the raised portion of the adapter piece.

In a second aspect, the present application provides a battery, including a battery unit of any one of the embodiments described above.

In a third aspect, the present application provides a power consuming device, including a battery described above for providing electric energy.

In a fourth aspect, the present application provides a preparation apparatus for a battery unit, including: an electrode assembly preparation module for preparing an electrode assembly, the electrode assembly including two electrode plates that have opposite polarities, a coated region and an uncoated region connected to each other being formed on the electrode plate, and the coated region being coated with an active material layer, wherein the uncoated region is used for connecting to an electrode terminal of the battery unit; and a surface of the uncoated region is provided with a hardness increasing layer, and the hardness increasing layer has an elasticity modulus greater than 6 Gpa.

The aforementioned description is only an overview of the technical solutions of the present application. In order to more clearly understand the technical means of the present application to implement same according to the contents of the specification, and in order to make the aforementioned and other objects, features and advantages of the present application more obvious and understandable, specific embodiments of the present application are exemplarily described below.

### Brief Description of the Drawings

Various other advantages and benefits will become apparent to those of ordinary skill in the art upon reading the following detailed description of the embodiments. The accompanying drawings are merely for the purpose of illustrating the embodiments, and are not to be construed as limiting the present application. Moreover, like components are denoted by like reference numerals throughout the drawings. In the drawings:
Fig. 1 is a schematic structural diagram of a vehicle according to some embodiments of the present application;
Fig. 2 is a schematic exploded structural diagram of a battery according to some embodiments of the present application;
Fig. 3 is a schematic exploded structural diagram of a battery unit according to some embodiments of the present application;
Fig. 4 is a partial schematic diagram of a cross-sectional structure of a battery unit in an axial direction according to some embodiments of the present application;
Fig. 5 is a partial schematic structural diagram of an electrode assembly shown in Fig. 4 according to some embodiments of the present application, illustrating a state of the electrode assembly before assembly;
Fig. 6 is a state of the electrode assembly shown in Fig. 5 after assembly; and
Fig. 7 is a partial schematic structural diagram of an electrode assembly according to some embodiments of the present application.

### Detailed Description of Embodiments

Embodiments of the technical solutions of the present application will be described in more detail below with reference to the drawings. The following embodiments are merely intended to more clearly illustrate the technical solutions of the present application, so they merely serve as examples, but are not intended to limit the scope of protection of the present application.

Unless otherwise defined, all technical and scientific terms used herein have the same meanings as those commonly understood by those skilled in the art to which the present application belongs. The terms used herein are merely for the purpose of describing specific embodiments, but are not intended to limit the present application. The terms "comprising" and "having" and any variations thereof in the description and the claims of the present application as well as the brief description of the accompanying drawings described above are intended to cover non-exclusive inclusion.

In the description of the embodiments of the present application, the technical terms "first", "second", etc. are merely used for distinguishing different objects, and are not to be construed as indicating or implying relative importance or implicitly indicating the number, particular order or primary-secondary relationship of the technical features modified thereby. In the description of the embodiments of the present application, the phrase "a plurality of" means two or more, unless otherwise explicitly and specifically defined.

The phrase "embodiment" mentioned herein means that the specific features, structures, or characteristics described in conjunction with the embodiment can be encompassed in at least one embodiment of the present application. The phrase at various locations in the description does not necessarily refer to the same embodiment, or an independent or alternative embodiment exclusive of another embodiment. Those skilled in the art understand explicitly or implicitly that the embodiment described herein may be combined with another embodiment.

In the description of the embodiments of the present application, the term "and/or" is merely intended to describe the associated relationship of associated objects, indicating that three relationships can exist, for example, A and/or B can include: the three instances of A alone, A and B simultaneously, and B alone. In addition, the character "/" herein generally indicates an "or" relationship between the associated objects.

In the description of the embodiments of the present application, the term "a plurality of" means two or more (including two), similarly the term "a plurality of groups" means two or more groups (including two groups), and the term "a plurality of pieces" means two or more pieces (including two pieces).

In the description of the embodiments of the present application, the orientation or position relationship indicated by the technical terms "central", "longitudinal", "transverse", "length", "width", "thickness", "upper", "lower", "front"; "rear", "left", "right", "vertical", "horizontal", "top", "bottom", "inner", "outer", "clockwise", "counterclockwise", "axial", "radial", "circumferential", etc. are based on the orientation or position relationship shown in the drawings and are merely intended to facilitate and simplify the description of the embodiments of the present application, rather than indicating or implying that the device or element considered must have a particular orientation or be constructed and operated in a particular orientation, and therefore not to be construed as limiting the embodiments of the present application.

In the description of the embodiments of the present application, unless otherwise explicitly specified and defined, the technical terms "mounting", "mutual connection", "connection", "fixing", etc. should be understood in a broad sense, for example, they may be a fixed connection, a detachable connection, or an integrated connection; may be a mechanical connection or an electrical connection; and may be a direct connection or an indirect connection through an intermediate medium, and may be communication between interiors of two elements or interaction between the two elements. For those of ordinary skill in the art, the specific meaning of the above terms in the embodiments of the present application can be understood according to specific situations.

At present, from the perspective of the development of the market situation, the traction batteries are used more and more widely. The traction batteries are not only used in energy storage power systems such as hydroelectric power plants, thermal power plants, wind power plants and solar power plants, but also widely used in electric transportation means such as electric bicycles, electric motorcycles and electric vehicles and in many fields such as military equipment and aerospace. With the continuous expansion of the application field of traction batteries, the market demand for the traction batteries is also expanding.

The applicant has noted that, in practical use, a battery is sometimes located in a vibration environment for a long time, and when a battery unit is in the environment, an electrode assembly is subjected to a vibration force after assembly is completed, resulting in continuous compression on a tab portion, thus shortening the whole electrode assembly and gradually increasing an amplitude. When exposed to a vibration environment again, the shortened electrode assembly generates a displacement space that tends to cause vibration thereof relative to a housing, and it is thus likely to accelerate fatigue break of a tab or an adapter piece, thereby resulting in a performance failure of the battery unit.

On the basis of the above considerations, in order to solve the problem that the service life and safety of the battery unit are reduced due to the vibration displacement of the electrode assembly during the use of the battery unit, the applicant, after an intensive research, has designed a battery unit; and by providing a hardness increasing layer on a surface of an uncoated region of an electrode plate, and setting the elasticity modulus of the hardness increasing layer to a preset value, the hardness of the uncoated region is increased, and the above-mentioned problems are accordingly solved.

The battery unit disclosed in the embodiments of the present application may be used in, but is not limited to, a power consuming device, such as a vehicle, a ship, or an aircraft. A power supply system provided with the power consuming device composed of a battery unit, a battery and the like disclosed in the present application may be used.

The embodiments of the present application provide a power consuming device using a battery as a power supply. The power consuming device may be, but is not limited to, a cell phone, a tablet, a laptop, an electric toy, an electric tool, an electromobile, an electric vehicle, a ship, a spacecraft, etc. The electric toy may include a stationary or mobile electric toy, for example, a game console, an electric vehicle toy, an electric ship toy, an electric airplane toy, etc. The spacecraft may include an aircraft, a rocket, a space shuttle, a spaceship, etc.

For ease of description of the following embodiments, an embodiment of the present application in which the power consuming device is a vehicle 1000 is taken as an example for description.

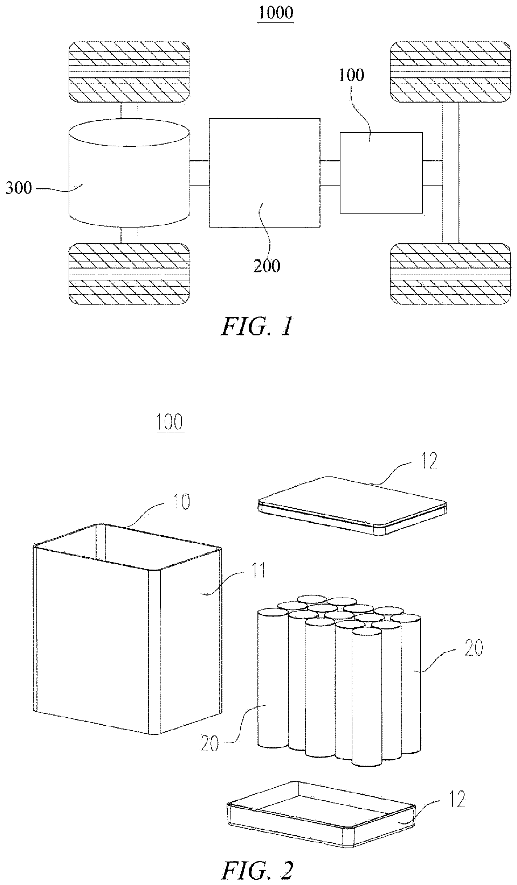

Referring to Fig. 1, Fig. 1 is a schematic structural diagram of a vehicle 1000 according to some embodiments of the present application. The vehicle 1000 may be a fuel vehicle, a gas vehicle, or a new energy vehicle. The new energy vehicle may be a battery electric vehicle, a hybrid electric vehicle, an extended-range vehicle, etc. A battery 100 is provided inside the vehicle 1000, and the battery 100 may be provided at the bottom, the front or the back of the vehicle 1000. The battery 100 may be configured to supply power to the vehicle 1000. For example, the battery 100 may be used as a power supply for operating the vehicle 1000. The vehicle 1000 may further include a controller 200 and a motor 300. The controller 200 is configured to control the battery 100 to supply power to the motor 300, for example, to meet working power requirements during starting, navigation and traveling of the vehicle 1000.

In some embodiments of the present application, the battery 100 can not only serve as a power supply for operating the vehicle 1000, but also serve as a power supply for driving the vehicle 1000, instead of or partially instead of fuel or natural gas, to provide driving power for the vehicle 1000.

Referring to Fig. 2, Fig. 2 is an exploded view of the battery 100 according to some embodiments of the present application. The battery 100 includes a case 10 and a battery unit 20. The battery unit 20 is accommodated in the case 10. The case 10 is configured to provide an accommodation space for the battery unit 20, and the case 10 may have various structures. In some embodiments, the case 10 may include a first portion 11 and a second portion 12. The first portion 11 and the second portion 12 are fitted to each other in a covered manner, and the first portion 11 and the second portion 12 jointly define the accommodation space for accommodating the battery unit 20. The second portion 12 may be of a hollow structure with one end open, the first portion 11 may be of a plate-like structure, and the first portion 11 covers an open side of the second portion 12 such that the first portion 11 and the second portion 12 jointly define the accommodation space; and the first portion 11 and the second portion 12 may also be of a hollow structure with one side open, and an open side of the first portion 11 covers the open side of the second portion 12. Of course, the case 10 formed by the first portion 11 and the second portion 12 may be in various shapes, such as a cylinder, a cuboid, etc.

In the battery 100, a plurality of battery units 20 may be provided. The plurality of battery units 20 may be connected in series, in parallel, or in series and parallel. The parallel-series connection means that the plurality of battery units 20 are connected both in series and in parallel. The plurality of battery units 20 may be directly connected together in series, or in parallel, or in series-parallel, and then a whole body composed of the plurality of battery units 20 is accommodated in the case 10; of course, the battery 100 may also be in the form that a plurality of battery units 20 are firstly connected in series or in parallel or in series and parallel to form a battery module, and then a plurality of battery modules are connected in series or in parallel or in series and parallel to form a whole and are accommodated in the case 10. The battery 100 may further include other structures. For example, the battery 100 may further include a busbar component for achieving electric connection between the plurality of battery units 20.

Each battery unit 20 may be a secondary battery or a primary battery, and may also be a lithium-sulfur battery, a sodium-ion battery, or a magnesium-ion battery, but is not limited thereto. The battery unit 20 may be in the shape of a cylinder, a flat body, a cuboid, etc.

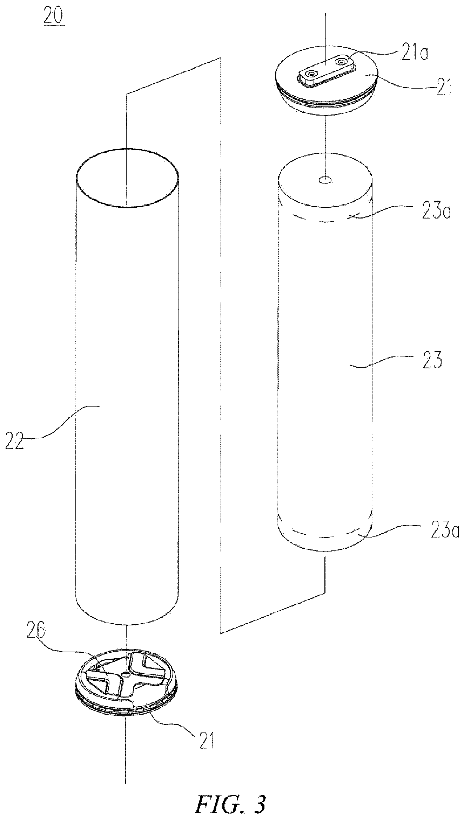

Referring to Fig. 3, Fig. 3 is a schematic exploded structural diagram of the battery unit 20 according to some embodiments of the present application. The battery unit 20 refers to the smallest unit of the battery. As shown in Fig. 3, the battery unit 20 includes an end cap 21, a housing 22, an electrode assembly 23 and other functional components.

The end cap 21 refers to a component that covers an opening of the housing 22 to isolate an internal environment of the battery unit 20 from an external environment. Without limitation, the end cap 21 may be shaped to adapt to the shape of the housing 22 so as to fit with the housing 22. Optionally, the end cap 21 may be made of a material (e.g., an aluminum alloy) with certain hardness and strength, and thus the end cap 21 is not easily deformed when being compressed or collided, so that the battery unit 20 can have higher structural strength, and the safety performance can also be improved. Functional components, such as an electrode terminal 21a, may be provided on the end cap 21. The electrode terminal 21a may be configured for electrical connection to the electrode assembly 23 for outputting or inputting electric energy of the battery unit 20. In some embodiments, a pressure relief mechanism, which is configured to release an internal pressure when the internal pressure or temperature of the battery unit 20 reaches a threshold, may be further provided on the end cap 21. The end cap 21 may also be made of various materials, such as copper, iron, aluminum, stainless steel, an aluminum alloy and plastic, which is not particularly limited in the embodiments of the present application. In some embodiments, an insulating member may be further provided on an inner side of the end cap 21. The insulating member may be used to isolate electrical connection components within the housing 22 from the end cap 21 so as to reduce the risk of short circuiting. Exemplarily, the insulating member may be made of plastic, rubber, etc.

The housing 22 is an assembly that is configured to fit with the end cap 21 so as to form the internal environment of the battery unit 20, wherein the formed internal environment may be used for accommodating the electrode assembly 23, an electrolytic solution and other components. The housing 22 and the end cap 21 may be separate components, and the housing 22 may be provided with an opening, at which the end cap 21 covers the opening to form the internal environment of the battery unit 20. Without limitation, the end cap 21 and the housing 22 may also be integrated. Specifically, the end cap 21 and the housing 22 may firstly form a common connecting surface before other components are placed into the housing, and then the end cap 21 covers the housing 22 when the interior of the housing 22 needs to be packaged. The housing 22 may be in various shapes and various sizes, for example, in the shape of a cuboid, a cylinder, a hexagonal prism, etc. Specifically, the shape of the housing 22 may be determined according to the specific shape and size of the electrode assembly 23. The housing 22 may be made of various materials, such as copper, iron, aluminum, stainless steel, an aluminum alloy, plastic, etc., which is not particularly limited in the embodiments of the present application.

The electrode assembly 23 is a component, where an electrochemical reaction occurs, in the battery unit 20. The housing 22 may include one or more electrode assemblies 23 therein. The electrode assembly 23 is mainly formed by winding or stacking a positive electrode plate and a negative electrode plate, and a separator is generally arranged between the positive electrode plate and the negative electrode plate. The electrode plate is formed by coating an active material on a current collector, the portions of the positive electrode plate and the negative electrode plate that each have the active material constitute a main body portion of the electrode assembly, the portions of the positive electrode plate and the negative electrode plate that have no active material each constitute an uncoated region, and the uncoated regions converge to form a tab 23a used for connection to an adapter piece 26 or an electrode terminal 21a of the battery unit 20. A positive tab and a negative tab can be both located at one end of the main body portion or respectively at two ends of the main body portion. During the charge/discharge process of the battery, the positive electrode active material and the negative electrode active material react with the electrolytic solution, and the tabs 23a are connected to the electrode terminals 21a to form a current loop.

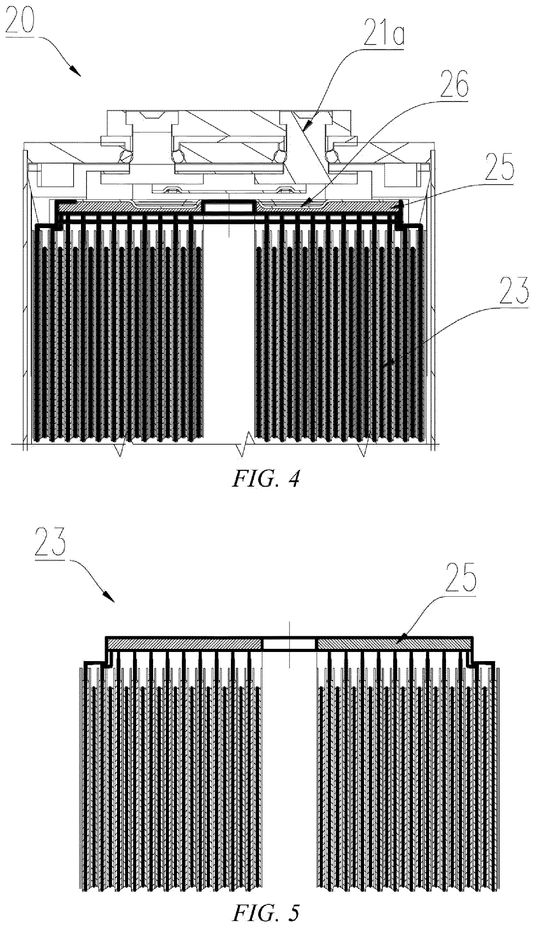

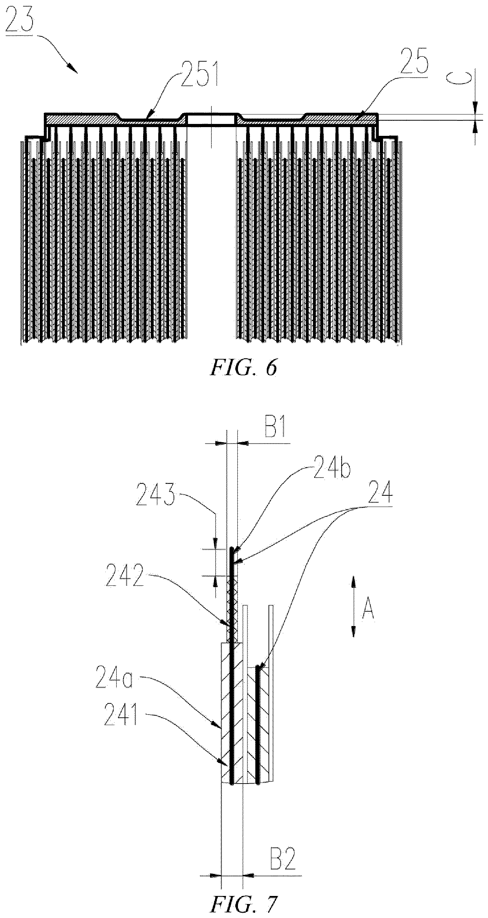

According to some embodiments of the present application, reference is made to Fig. 3, and further reference is made to Figs. 4 to 7. Fig. 4 is a partial schematic diagram of a cross-sectional structure of the battery unit 20 shown in Fig. 3 in an axial direction. Fig. 5 is a partial schematic structural diagram of the electrode assembly 23 shown in Fig. 4 according to some embodiments of the present application, illustrating a state of the electrode assembly 23 before assembly. Fig. 6 is a state of the electrode assembly 23 shown in Fig. 5 after assembly. Fig. 7 is a partial schematic structural diagram of an electrode assembly 23 according to some embodiments of the present application. The present application provides a battery unit 20, including: an electrode assembly 23, the electrode assembly 23 including two electrode plates 24 that have opposite polarities, a coated region 24a and an uncoated region 24b connected to each other being formed on the electrode plate 24, the coated region 24a being coated with an active material layer 241, and the uncoated region 24b being used for connecting to the electrode terminal 21a of the battery unit 20; wherein a surface of the uncoated region 24b is provided with a hardness increasing layer 242, and the hardness increasing layer 242 has an elasticity modulus greater than 6 Gpa.

The uncoated region 24b mentioned in the present application refers to the portion of the electrode plate 24 that is not coated with the active material layer and is used for connection to the electrode terminal 21a, which may be connected to the electrode terminal 21a directly or by means of an adapter piece. The electrode plate 24 mentioned in the present application is generally configured as a plate-like structure, and the surfaces of the uncoated regions 24b generally refer to two opposite side surfaces of the plate-like structure. The hardness increasing layer 242 mentioned in the present application refers to that the elasticity modulus thereof is greater than the elasticity modulus of the current collector, and can increase, when the hardness increasing layer is provided in the uncoated region 24b, the elasticity modulus of the uncoated region 24b, namely, the elasticity modulus of the current collector, in the region. The elasticity modulus mentioned in the present application can be understood as an index for measuring the degree of difficulty in elastic deformation of a material, and the greater a value thereof, the greater a stress for a certain elastic deformation of the material, namely, the greater the material stiffness, and the elasticity modulus of the hardness increasing layer 242 in the present application is set to be greater than 6 Gpa. In the present application, the technical solution is described by taking a cylindrical battery unit 20 as an example, and the axial directions mentioned herein all refer to the axis direction of the cylindrical battery unit 20.

With the above arrangement, it is generally the case that the portion of the electrode plate 24 for connection to the uncoated region 24b of the electrode terminal 21a has an elasticity modulus smaller than 6 Gpa and a relatively small rigidity, namely, a small stress generated by the battery unit 20 during the vibration can also deform the uncoated region 24b to some extent, so that the amplitude of an electrode assembly in the prior art gradually increases during the vibration of the battery. In the present application, the surface of the uncoated region 24b is provided with the hardness increasing layer 242 having the elasticity modulus greater than 6 Gpa, which directly increases the rigidity of the uncoated region 24b; and it is difficult for the uncoated region 24b to deform by means of the small stress generated by the battery unit 20 during vibration, and the occurrence of the problem can thus be effectively reduced that the uncoated region 24b is broken due to continuous vibration after the uncoated region 24b is connected to the electrode terminal 21a, thereby effectively prolonging the service life of the battery 100 and improving the safety thereof.

Referring to Fig. 7, in some embodiments, the height of the hardness increasing layer 242 may be 0.2 to 0.7 times of the height of the uncoated region 24b in a first direction A. The first direction A is an extending direction of the uncoated region 24b.

The first direction A mentioned in the present application is the extending direction of the uncoated region 24b, that is, the direction in which the electrode plate 24 is connected to the electrode terminal 21a by means of the uncoated region 24b. The height mentioned in the present application should be understood as the length by which the uncoated region 24b is flatly laid or spread in the extending direction. With the above arrangement, the height of the hardness increasing layer 242 is 0.2 to 0.7 times of the height of the uncoated region 24b; on the one hand, it is possible to ensure the coverage area of the hardness increasing layer 242 so as to effectively play the effect of increasing the elasticity modulus of the uncoated region 24b; on the other hand, it is possible to ensure an effective welding area of the uncoated region 24b so as to ensure the strength of the uncoated region 24b after connection.

In some embodiments, the height of the hardness increasing layer 242 may be 0.5 time of the height of the uncoated region 24b. In conventional use, the height of the uncoated region 24b may be generally set to be 2 mm to 10 mm, and the height of the hardness increasing layer 242 may be 1 mm to 5 mm. With the arrangement, the problem can be effectively solved that the reinforcing effect of the elasticity modulus is poor due to the small height of the hardness increasing layer 242; on the other hand, it is also possible to effectively reduce the occurrence of the problems that the large height of the hardness increasing layer 242 affects a welding effect and a separator material is accordingly burned.

Referring to Fig. 7, in some embodiments, the thickness B1 of the hardness increasing layer 242 may be smaller than the thickness B2 of the active material layer 241.

The hardness increasing layer 242 mentioned in the present application may be provided on one side of the uncoated region 24b of the electrode plate 24, or may be provided on two sides of the uncoated region 24b of the electrode plate 24. Similarly, the active material layer 241 mentioned in the present application may be applied to one side or two sides of the electrode plate 24, typically to the two sides of the electrode plate 24. The thickness mentioned in the present application should be understood as the overall thickness B1 of the hardness increasing layer 242 and the overall thickness B2 of the active material layer 241. With the arrangement, the thickness B1 of the hardness increasing layer 242 is smaller than the thickness B2 of the active material layer 241, such that the coated region 24a of the electrode plate 24 can be well closely wound, thereby ensuring the overall size of the electrode assembly 23, and reducing the occurrence of the problem that a local excessive diameter of the uncoated region 24b affects in-housing assembly.

In some embodiments, the hardness increasing layer 242 has a thickness B1 great than or equal to 11 um.

As mentioned in the present application, the hardness increasing layer 242 having a thickness B1 great than or equal to 11 um should be understood as further limitation provided on the basis that the thickness B1 of the hardness increasing layer 242 is smaller than the thickness B2 of the active material layer 241. With the arrangement, the greater the thickness B1 of the hardness increasing layer 242, the more the elasticity modulus of the hardness increasing layer 242 can be increased, so that the elasticity modulus of the uncoated region 24b can be further increased.

Referring to Fig. 7, in the illustrated embodiment, the hardness increasing layer 242 may be provided on the two sides of the uncoated region 24b.

Being provided on the two sides of the uncoated region 24b mentioned in the present application should be understood as being oppositely provided on the two sides of the uncoated region 24b, namely, forming a mirror-image component relative to the uncoated region 24b, such that the hardness increasing layers 242 on the two sides of the uncoated region 24b have equal thickness and height. By providing the hardness increasing layers 242 on the two sides, the elasticity modulus of the uncoated region 24b is further increased, and the resistance of the uncoated region 24b to deformation is effectively improved.

Referring to Fig. 7, in the illustrated embodiment, the hardness increasing layer 242 may be in abutting connection to the active material layer 241.

The abutting connection mentioned in the present application refers to that there is no gap between the hardness increasing layer 242 and the active material layer 241. With the arrangement, it is possible to connect the hardness increasing layer 242 to the active material layer 241, so as to solve the problem that the uncoated region 24b has a weak hardness region at a portion close to the coated region 24a and accordingly breakage occurs in the weak region.

In some embodiments, the hardness increasing layer 242 is adhesively fixed to the surface of the uncoated region 24b. With the arrangement, the hardness increasing layer 242 is directly adhesively fixed to the surface of the uncoated region 24b, and is more convenient to use.

In some embodiments, the hardness increasing layer 242 may be configured as an adhesive or an adhesive tape. In the present application, the material of the adhesive can be one or more of polyvinylidene fluoride, carboxylic acid-modified polyvinylidene fluoride, acrylic acid-modified polyvinylidene fluoride, polyvinylidene chloride, carboxylic acid-modified polyvinylidene chloride, acrylic acid-modified polyvinylidene chloride, polyvinylidene chloride copolymer, polyvinylidene fluoride copolymer, acrylonitrile-acrylate copolymer, acrylonitrile-acrylate-acrylic acid copolymer, polyvinyl alcohol, polyurethane, polyacrylate, vinyl acetate resin, etc.; and the material of the adhesive tape may be one of polypropylenes, polyethylenes, polyester fibers, polyvinyl chloride, etc. With the arrangement, the adhesive or the adhesive tape having the above elasticity modulus is used, so that on the one hand, the cost thereof is low; on the other hand, the adhesive or the adhesive tape used has a low influence on the electrode assembly 23, and can effectively ensure the overall performance of the electrode assembly 23.

Referring to the embodiment shown in Fig. 7, the uncoated region 24b may include a connecting portion 243, wherein the connecting portion 243 may be used for connecting to the adapter piece 26 or the electrode terminal 21a of the battery unit 20, and the hardness increasing layer 242 is arranged between the connecting portion 243 and the coated region 24a. The connecting portion 243 mentioned in the present application is obtained by flattening the tab 25, namely, the flattened tab 25 is compressed to obtain a dense and compact end surface, facilitating welding with the electrode terminal 21a or the adapter piece 26. In the present application, after the connecting portion 243 is connected to the adapter piece 26 or the electrode terminal 21a, the weak hardness region is formed between the connecting portion 243 and the coated region 24a, and by providing the hardness increasing layer 242 on the weak hardness region, the hardness of the weak hardness region can be directly increased, and accordingly, the uncoated region 24b can have greater resistance to deformation.

Referring to Fig. 4, in the illustrated embodiment, the uncoated region 24b of the electrode plate is configured to: form the tab 25 by means of convergence. The battery unit 20 further includes the adapter piece 26, with one end of the adapter piece 26 being connected to the electrode terminal 21a, and the other end of the adapter piece 26 being press-fitted with the tab 25.

The adapter piece 26 mentioned in the present application has electrical conductivity and is used for connecting to the electrode terminal 21a and the electrode plate 24. The adapter piece 26 mentioned in the present application may form a raised portion facing the electrode plate 24 when the connection to the electrode terminal 21a is achieved. The adapter piece is press-fitted with the tab 25 by means of this portion. With the arrangement, the press-fitting between the adapter piece and the tab 25 can limit the axial movement of the electrode assembly 23 in an interference manner to some extent, so that the stability of the electrode assembly 23 can be effectively improved.

Referring to Fig. 6, in the illustrated embodiment, a recessed region 251 is formed in the surface of the tab 25 facing the end cap, and the adapter piece 26 is partially accommodated in the recessed region 251.

The recessed region 251 mentioned in the present application should be understood as matching the above-mentioned raised portion. With the arrangement, the press-fitting between the raised portion and the recessed region 251 of the tab 25 can also decrease a moving space of the electrode assembly 23 in other directions excluding the axial direction to some extent, so that the vibration of the electrode assembly 23 can be further avoided.

In the embodiment shown in Fig. 6, the depth C of the recessed region 251 is greater than or equal to 1 mm. The depth C mentioned in the present application refers to the dimension of the battery unit 20 shown in the figure in the axial direction. With the arrangement, the recessed region 251 greater than or equal to 1 mm is formed in the tab 25, which can play a superior stabilizing effect after the recessed region matches the raised portion of the adapter piece 26.

Reference is now made to Fig. 2, Fig. 2 is an exploded view of a battery 100 according to some embodiments of the present application. The battery 100 according to some embodiments of the present application includes any one of the battery units 20 described above.

Reference is now made to Fig. 1, Fig. 1 is a schematic structural diagram of a power consuming device (vehicle 1000) according to some embodiments of the present application. The power consuming device includes a battery 100 described above, the battery 100 being used for providing electric energy.

The present application further provides a preparation apparatus for a battery unit 20. The preparation apparatus includes an electrode assembly preparation module for preparing an electrode assembly 23, wherein the electrode assembly 23 includes two electrode plates 24 that have opposite polarities, a coated region 24a and an uncoated region 24b connected to each other are formed on the electrode plate 24, the coated region 24a is coated with an active material layer 241, and the uncoated region 24b is used for connecting to the electrode terminal 21a of the battery unit 20; wherein a surface of the uncoated region 24b is provided with a hardness increasing layer 242, and the hardness increasing layer 242 has an elasticity modulus greater than 6 Gpa.

Finally, it should be noted that the above embodiments are merely used for illustrating rather than limiting the technical solution of the present application. Although the present application has been illustrated in detail with reference to the foregoing embodiments, it should be understood by those of ordinary skill in the art that the technical solutions recorded in the foregoing embodiments may still be modified, or some or all of the technical features thereof may be equivalently substituted; and such modifications or substitutions do not make the essence of the corresponding technical solution depart from the scope of the technical solutions of the embodiments of the present application, and should fall within the scope of the claims and the description of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A battery unit, comprising:
an electrode assembly comprising two electrode plates that have opposite polarities, a coated region and an uncoated region connected to each other being formed on the electrode plate, the coated region being coated with an active material layer, and the uncoated region being used for connecting to an electrode terminal of the battery unit;
wherein a surface of the uncoated region is provided with a hardness increasing layer, and the hardness increasing layer has an elasticity modulus greater than 6 Gpa.

2. The battery unit according to claim 1, wherein the height of the hardness increasing layer is 0.2 to 0.7 times of the height of the uncoated region in a first direction, the first direction being an extending direction of the uncoated region.

3. The battery unit according to claim 2, wherein the thickness of the hardness increasing layer is smaller than the thickness of the active material layer.

4. The battery unit according to claim 3, wherein the hardness increasing layer has a thickness great than or equal to 11 um.

5. The battery unit according to any one of claims 1-4, wherein the hardness increasing layers are provided on two sides of the uncoated region in a thickness direction of the electrode plate.

6. The battery unit according to any one of claims 1-5, wherein the hardness increasing layer is in abutting connection to the active material layer.

7. The battery unit according to any one of claims 1-6, wherein the hardness increasing layer is adhesively fixed to the surface of the uncoated region.

8. The battery unit according to claim 7, wherein the hardness increasing layer is configured as an adhesive or an adhesive tape.

9. The battery unit according to any one of claims 1-8, wherein the uncoated region comprises a connecting portion for connecting to the adapter piece or the electrode terminal of the battery unit, and the hardness increasing layer is arranged between the connecting portion and the coated region.

10. The battery unit according to any one of claims 1-9, wherein the uncoated region of the electrode plate is configured to: form a tab by means of convergence, and the battery unit further comprises an adapter piece, with one end of the adapter piece being connected to the electrode terminal, and the other end of the adapter piece being press-fitted with the tab.

11. The battery unit according to claim 10, wherein a recessed region is formed in the side of the tab facing the adapter piece, and the adapter piece is partially accommodated in the recessed region.

12. The battery unit according to claim 11, wherein the recessed region has a depth greater than or equal to 1 mm.

13. A battery, comprising a battery unit according to any one of claims 1-12.

14. A power consuming device, comprising a battery according to claim 13, the battery being configured to supply electric energy.

15. A preparation apparatus for a battery unit, the preparation apparatus comprising an electrode assembly preparation module for preparing an electrode assembly, the electrode assembly comprising two electrode plates that have opposite polarities, a coated region and an uncoated region connected to each other being formed on the electrode plate, the coated region being coated with an active material layer, and the uncoated region being used for connecting to an electrode terminal of the battery unit; wherein a surface of the uncoated region is provided with a hardness increasing layer, and the hardness increasing layer has an elasticity modulus greater than 6 Gpa.
